# EUROPÄISCHE PATENTSCHRIFT

(11) **EP 1 415 179 B1**
(45) Veröffentlichungstag und Bekanntmachung des Hinweises auf die Patenterteilung: **10.11.2004**
(21) Anmeldenummer: 03731708.8
(22) Anmeldetag: 23.01.2003
(51) Int. Cl.: G01T 1/29

(54) **VORRICHTUNG UND VERFAHREN ZUM ERSTELLEN EINER KORREKTURKENNLINIE FÜR EINE REDUKTION VON ARTEFAKTEN BEI EINER TOMOGRAPHIE**
DEVICE AND METHOD FOR CREATING A CORRECTION CHARACTERISTIC CURVE FOR REDUCING ARTEFACTS IN TOMOGRAPHY
DISPOSITIF ET PROCEDE DE CREATION D'UNE COURBE CARACTERISTIQUE DE CORRECTION POUR LA REDUCTION DES ARTEFACTS D'UNE TOMOGRAPHIE

(30) Priorität: 24.01.2002 DE 10202732
(43) Veröffentlichungstag der Anmeldung: 06.05.2004
(73) Patentinhaber: FRAUNHOFER-GESELLSCHAFT ZUR FÖRDERUNG DER ANGEWANDTEN FORSCHUNG E.V., 80686 München (DE)
(72) Erfinder: KASPERL, Stefan, D-91058 Erlangen (DE); HASSLER, Ulf, D-91120 Heilsbronn (DE); BAUSCHER, Ingo, D-90489 Nürnberg (DE); SCHRÖPFER, Stefan, D-90522 Oberasbach (DE)
(74) Vertreter: Schoppe, Fritz, Dipl.-Ing.
(86) Internationale Anmeldenummer: PCT/EP2003/000683
(87) Internationale Veröffentlichungsnummer: WO 2003/062856

(56) Entgegenhaltungen:
- US-A- 5 095 431
- US-A- 6 035 012

## Beschreibung

Die vorliegende Erfindung bezieht sich auf tomographische Verfahren und insbesondere auf die Strahlaufhärtungskorrektur bei der zwei- oder dreidimensionalen Computertomographie.

Bei der Computertomographie verursachen verschiedene physikalische Effekte Artefakte in den rekonstruierten Tomogrammen, die die Bildqualität zum Teil deutlich vermindern. Um Vermessungsaufgaben mit der gewünschten Genauigkeit und automatisiert durchführen zu können, müssen Computertomographie- (CT) Rekonstruktionen jedoch möglichst artefaktfrei sein.

Computertomographische Verfahren sind in der Technik bekannt. Eine Strahlungsquelle durchstrahlt ein Objekt. Die durch das Objekt hindurchtretende Strahlung ist in ihrer Intensität je nach der Länge und Absorptionseigenschaften des Objekts im Strahlengang geschwächt. Hinter dem Objekt ist ein Detektor angeordnet, der Durchstrahlungswerte erfaßt, d. h. die Intensität der Strahlung, die durch das Objekt hindurchgetreten ist. Typischerweise ist der Detektor als zweidimensionaler Pixeldetektor ausgeführt, der ausgangsseitig ein zweidimensionales Durchstrahlungsbild des Objekts liefert, wobei die Intensität der durch das Objekt hindurchgetretenen Strahlung sowohl von den Absorptionseigenschaften des Objekts, die über den Weg der Strahlung durch das Objekt variieren kann, als auch von der Durchstrahlungslänge des Objekts abhängt.

Typischerweise wird als Strahlungsquelle eine Röntgenstrahlenquelle verwendet. Wie es bekannt ist, arbeitet die Computertomographie auf der Basis von Durchstrahlungsbildern. Eine computertomographische Aufnahme besteht aus einer Sequenz von Projektionen, wobei das Objekt in einer bestimmten Position durchstrahlt wird, wonach die Durchstrahlungsrichtung z. B. um 1 Grad geändert wird, um wieder eine Projektion aufzuzeichnen etc. Eine computertomographische Aufnahme umfaßt somit eine Folge von Projektionen, wobei jeder Projektion ein Drehwinkel bzw. allgemein Geometriedaten zugeordnet sind, aus denen ableitbar ist, wie sich die Lage des Objekts von einer Projektion zur nächsten verändert hat. Jede Projektion umfaßt wiederum ein zweidimensionales Array von Durchstrahlungswerten, die typischerweise Intensitätswerte sind.

Je nach gewünschter Anwendung können beispielsweise 360 Projektionen aufgezeichnet werden, wenn das Objekt zwischen zwei Projektionen immer um 1 Grad gedreht wird. Je nach Anwendungsfall sind jedoch auch wesentlich mehr oder wesentlich weniger Projektionen denkbar. Die einzelnen Projektionen werden dann, wie es bekannt ist, mit Rekonstruktionsverfahren, z. B. gefilterte Rückprojektion, verarbeitet, um dreidimensionale Volumendaten zu erzeugen, die aus einer Menge von Volumenelementen oder Voxeln bestehen. Typischerweise ist bei der dreidimensionalen Computertomographie jedem Voxel ein Wert zugeordnet, aus dem erkennbar ist, welche Absorptionsdichte das entsprechende Element an diesem Ort hat.

Die dreidimensionale Computertomographie wird nicht nur im medizinischen Bereich angewendet, sondern insbesondere auch in der industriellen Qualitätskontrolle an Prüflingen im Hinblick auf quantitative Aussagen, wie z. B. bei Vermessungsaufgaben. Als einer der wichtigsten Anwendungsfälle sei die Gußteilefertigung in der Automobilindustrie genannt. Die Qualitätskontrolle bei Gußteilen beinhaltet vor allem das Auffinden von Fehlstellen und das Prüfen von Abmessungen. Hauptaufgaben bei der Vorserienentwicklung sind die schnelle Überprüfung der Maßhaltigkeit von Gußteilen mit komplexer Geometrie sowie die Analyse von Abweichungen der Geometriedaten von in einem Teileplan enthaltenen Solldaten.

Unter dem Aspekt industrieller Anwendbarkeit im Vergleich mit anderen Quellen (Synchrontron oder Gammastrahler) werden Röntgenröhren als Strahlungsquellen bevorzugt verwendet. Anstelle eines Zeilendetektors in der zweidimensionalen Computertomographie wird in der dreidimensionalen Computertomographie ein flächiger Röntgendetektor eingesetzt. Die dreidimensionale Computertomographie benötigt für die Rekonstruktion nur eine Umdrehung des Objekts, wodurch sich Meßzeiten im Vergleich zur zweidimensionalen Computertomographie beträchtlich verkürzen.

Allerdings emittieren die in der Computertomographie verwendeten Röntgenröhren polychromatische Strahlung. Die Wechselwirkung der polychromatischen Röntgenstrahlung beim Durchgang durch die Materie ist energieabhängig. Reale Systemkennlinien, die einen Intensitätswert einer Durchstrahlungslänge zuordnen, haben daher einen nicht-linearen Verlauf, verursacht durch Effekte wie Strahlaufhärtung, Comptonstreuung und Nichtlinearitäten des Detektors. Dies verursacht in den rekonstruierten Objektdarstellung Artefakte, wie z. B. Streifen, unscharfe Kanten, tonnenförmige Verzeichnungen und sogenannte Cupping-Effekte, die die Bildqualität verschlechtern und Vermessungsaufgaben erschweren oder sogar verhindern.

Ein einfaches und gängiges Korrekturverfahren in der Computertomographie ist die Verwendung eines Vorfilters, das als Frequenz-Hochpaßfilter wirkt. Dadurch wird das Energiespektrum des Röntgenstrahlers auf höhere Energien eingeschränkt. Aufwendigere Korrekturverfahren bestimmen den nicht-linearen Verlauf der Kennlinie durch Messungen an Referenzobjekten aus dem gleichen Material wie das Untersuchungsobjekt, wobei Stufenkeile bevorzugt verwendet werden. Ein Stufenkeil besteht aus Abschnitten unterschiedlicher Dicke, wobei die jeweilige Dicke der Abschnitte genau bekannt ist. Eine Projektion des Stufenkeils liefert für jede bekannte Dicke einen Durchstrahlungswert, so daß die Systemkennlinie, die ja den Zusammenhang zwischen Durchstrahlungswert (Intensität oder der zur Intensität reziproken Schwächung bezogen auf einen Referenz-Intensitätswert) und Durchstrahlungslänge angibt, durch das Referenzobjekt erzeugt werden kann. In dieser Systemkennlinie, die durch das Referenzobjekt erzeugt wird, sind dann Einflüsse sowohl des Strahlers als auch des Detektors berücksichtigt.

Nach einem Eichverfahren zum Bestimmen der Systemkennlinie eines Strahler/Detektor-Systems unter Verwendung des Referenzobjekts wird dann die ermittelte Systemkennlinie abgespeichert und in einem darauffolgenden Meßdurchgang dazu verwendet, um von einem Meßobjekt erzeugte Projektionsdaten einer Vorkorrektur zu unterziehen, um dann, auf der Basis der gemäß der Systemkennlinie vorkorrigierten Projektionsdaten eine dreidimensionale Rekonstruktion durchzuführen, um Volumendaten zu erzeugen, anhand derer die Dichte des Meßobjekts abhängig von der Position im Meßobjekt abgelesen werden kann.

Das Referenzobjekt-Verfahren ist dahingehend nachteilhaft, daß zunächst ein Referenzobjekt in das System aus Strahler und Detektor eingebracht werden muß, um das System zu eichen. Darüber hinaus wird ein definiertes Referenzobjekt benötigt, dessen Dichte spezifiziert ist. Wenn jedoch die Materialdichte der Meßobjekte von der Dichte des Referenzobjekts abweicht, kann die Systemkennlinie möglicherweise nicht mehr korrekt sein.

In dem Beitrag zur Jahrestagung 1998 der deutschen Gesellschaft für eine zerstörungsfreie Prüfung, Bamberg, 7. bis 9. September 1998, mit dem Titel: "Korrektur der Strahlaufhärtung in der Computertomographie unter Verwendung simulierter und realer Objektdaten", O. Haase et al., ist ein Verfahren skizziert, das Kenntnis über die Geometrie und die Materialzusammensetzung des Meßobjekts ausnutzt, um eine Strahlaufhärtungskorrektur ohne Testkörper zu ermöglichen. Die Geometriedaten des Objekts werden entweder durch eine Simulation des realen Objekts bestimmt oder aus der rekonstruierten Bildmatrix selbst. Für eine vorgegebene Materialzusammensetzung wird die Schwächung im Objekt berechnet und damit die gemessenen Schwächungswerte korrigiert. Die Berechnung der Schwächung wird mit einem Monte-Carlo-Verfahren, dem EGS4-Code, durchgeführt, wobei sowohl das Energiespektrum des benutzten Röntgenstrahlers als auch die Eigenschaften des Detektors berücksichtigt werden. Die Schwächungskoeffizienten der Elemente werden aus Literaturtabellen genommen.

Dieses Konzept zur Strahlaufhärtungskorrektur benötigt zwar kein Referenzobjekt, jedoch vorgegebene Materialzusammensetzungen, das Spektrum des benutzten Röntgenstrahlers und die Eigenschaften des Detektors sowie Schwächungskoeffizienten von Elementen aus Literaturtabellen. Dies führt dazu, daß das Verfahren in manchen Anwendungen nicht die nötige Flexibilität hat, wenn nämlich nicht alle benötigten Informationen vorliegen.

Die Aufgabe der vorliegenden Erfindung besteht darin, ein flexibleres Konzept zum Erstellen einer Korrekturkennlinie für eine Reduktion von Artefakten bei einer Tomographie zu schaffen.

Diese Aufgabe wird durch eine Vorrichtung nach Patentanspruch 1 oder durch ein Verfahren nach Patentanspruch 15 gelöst.

Der vorliegenden Erfindung liegt die Erkenntnis zugrunde, daß die Korrekturlinie aus dem aus einem Material bestehenden Meßobjekt selbst heraus generiert werden kann, indem aus den Projektionsdaten selbst zunächst ohne Vorgabe einer bestimmten Systemkennlinie oder unter Verwendung einer idealen linearen Systemkennlinie eine artefaktbehaftete Volumendarstellung erzeugt wird, aus der dann vorzugsweise durch Binarisierung der typischerweise dreidimensionalen Rekonstruktionsdaten Durchstrahlungslängen und zugeordnete Durchstrahlungswerte ermittelt werden, aus denen dann eine erste Korrekturkennlinie erzeugt wird. Diese aus der artefaktbehafteten dreidimensionalen Darstellung des Objekt erzeugte Korrekturkennlinie kann dann dazu verwendet werden, um die Projektionsdaten einer Vorkorrektur zu unterziehen, um vorkorrigierte Projektionsdaten zu erhalten, aus denen dann eine weitere - wie sich herausgestellt hat - deutlich weniger artefaktbehaftete dreidimensionale Volumendarstellung des Objekts erhalten werden kann.

Ist diese dreidimensionale Volumendarstellung bereits ausreichend artefaktfrei, so muß das erfindungsgemäße Konzept lediglich einmal durchgeführt werden. Stellt sich dagegen heraus, daß die Artefakte noch nicht ausreichend eliminiert sind, so wird es bevorzugt, die Korrekturkennlinie iterativ zu verbessern, indem aus der Artefakt-reduzierten Volumendarstellung des Objekts wieder Durchstrahlungslängen und zugeordnete Durchstrahlungswerte berechnet werden, um eine gewissermaßen korrigierte Korrekturkennlinie zu erzeugen, die dann, in einem nächsten Lauf, wieder zur Vorkorrektur der Projektionsdaten verwendet wird, um eine stärker Artefakt-reduzierte Volumendarstellung des Objekts zu erhalten.

Diese Iterationsschleife kann bis zu einem bestimmten Abbruchkriterium fortgesetzt werden, so daß schließlich ohne Informationen über den Strahler, den Detektor oder sonstige Dinge und insbesondere ohne Referenzobjekt die Korrekturkennlinie für ein Detektor/Strahler-System lediglich aufgrund des Meßobjekts selbst erzeugt wird, wobei die Korrekturkennlinie dann, nach dieser "Eichungs"-Iteration dazu verwendet werden kann, um Meßobjekte in einem Meßdurchgang quantitativ zu erfassen.

Es sei darauf hingewiesen, daß die Kennlinie dazu verwendet wird, um aus den Projektionsdaten eines Schnittbildes, das zunächst nur Schwächungswerte bzw. Intensitätswerte an geometrischen Positionen umfasst, den Schwächungswerten zugeordnete Durchstrahlungslängen zu ermitteln. Diese Durchstrahlungslängen, die durch die Kennlinie aus den Schwächungswerten ermittelt werden, werden dann in einem normalen CT-Rekonstruktionsprozeß verwendet, um die Darstellungsdaten zu erhalten.

Die vorliegende Erfindung ist dahingehend vorteilhaft, daß zur Erzeugung der Korrekturkennlinie lediglich die Rohdaten, d. h. die Projektionsdaten selbst, benötigt werden. Insbesondere wird kein Referenzobjekt benötigt.

Ein weiterer Vorteil der vorliegenden Erfindung besteht darin, daß das erfindungsgemäße Konzept keine Kenntnisse über die Geometrie oder die Materialzusammensetzung des Prüflings oder Informationen über das Energiespektrum der verwendeten Röntgenstrahlungsquelle benötigt.

In diesem Zusammenhang sei darauf hingewiesen, daß eine Kennlinie einerseits auf dem Material des Objekts und andererseits auf dem Spektrum bzw. Eigenschaften der verwendeten Röntgenquelle basiert. Für eine korrekte Rekonstruktion wird eine korrekte Kennlinie, die hier auch als Korrekturkennlinie bezeichnet wird, benötigt.

Während bisher sowohl die Röntgenquelle vermessen werden musste als auch das Material bzw. der Absorptionskoeffizient des Materials für das eingesetzte Röntgenspektrum a priori bekannt sein musste, die beide in die Korrekturkennlinie eingehen, kann gemäß der vorliegenden Erfindung die Korrektur ohne Kenntnis des Materials des Objekts, das aus einem einzigen Material besteht, und ohne Kenntnis des Spektrums der Röntgenquelle ermittelt werden. Nachdem beide Größen in die Korrekturkennlinie eingehen, kann zwar aus der erfindungsgemäß erhaltenen Korrekturkennlinie nicht ohne weiteres auf den Absorptionskeoffizienten des Materials oder auf das Spektrum der Röntgenquelle geschlossen werden.

Dies ist jedoch nicht problematisch, da für eine artefaktreduzierte Tomographiedarstellung lediglich eine Korrekturkennlinie, nicht aber die beiden oben genannten Informationen getrennt voneinander benötigt werden.

Aufgrund der Tatsache, daß die oben genannten Informationen nicht - getrennt voneinander - benötigt werden, ist das erfindungsgemäße Konzept flexibel einsetzbar. Diese Flexibilität behebt Probleme dahingehend, daß bei Prüflingen das Mischverhältnis der Legierung leicht variiert, was zu nicht-exakten Kenntnissen der Materialzusammensetzung führt, so daß System-Korrekturkennlinien, die auf der Materialzusammensetzung basieren, artefaktbehaftete Rekonstruktionen nach sich ziehen können.

Darüber hinaus hat es sich als problematisch erwiesen, ein reales Energiespektrum zu simulieren. Simulierte Energiespektren haben immer eine gewisse Abweichung zum Realspektrum, so dass auch eine auf der Basis eines simulierten Energiespektrums erzeugte Systemkennlinie inhärent fehlerhaft ist. Beim erfindungsgemäßen Konzept dagegen werden diese Informationen nicht benötigt, so daß sie auch nicht zu Fehlerquellen in der Korrekturkennlinie führen können.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Übersichts-Diagramm für das erfindungsgemäße Verfahren und die erfindungsgemäße Vorrichtung;
- Fig. 2: eine Skizze des Strahlungsquelle-Detektor-Systems mit einem Objekt; und
- Fig. 3: eine Gegenüberstellung einer idealen linearen Kennlinie und einer erfindungsgemäß erzeugten realen Korrekturkennlinie zu Vorkorrekturzwecken.

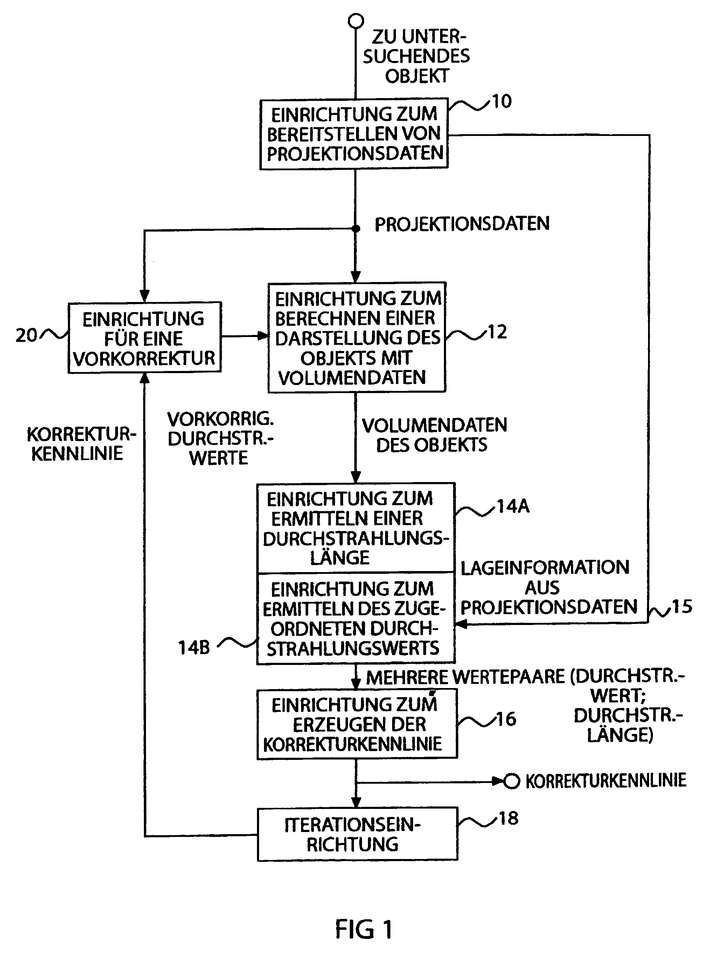

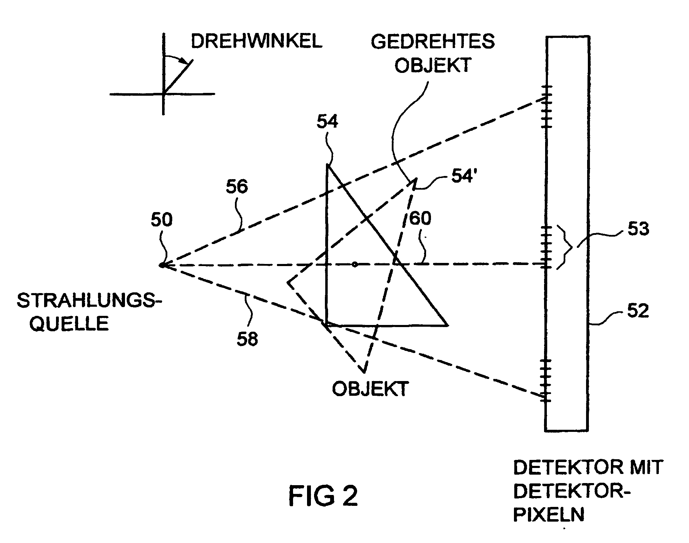

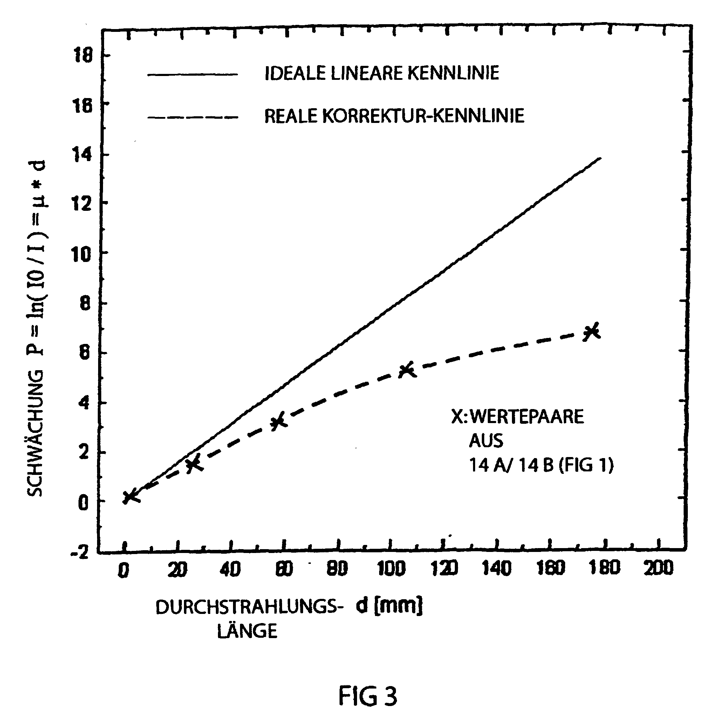

Das Übersichtsdiagramm in Fig. 1 umfaßt zunächst eine Einrichtung 10 zum Bereitstellen von Projektionsdaten eines zu untersuchenden Objekts. Die Einrichtung 10 zum Bereitstellen von Projektionsdaten kann entweder ein in Fig. 2 gezeigtes Strahlungsquelle/Detektor-System selbst sein, aus dem die Projektionsdaten direkt gemessen und dann ausgegeben werden, um die erfindungsgemäße Korrekturkennlinie zu erzeugen, oder die Einrichtung 10 zum Bereitstellen von Projektionsdaten kann ein Speichermedium sein, in dem vorher erfaßte Projektionsdaten eines Objekts abgespeichert sind. Bevor weiter auf Fig. 1 eingegangen wird, sei zunächst auf Fig. 2 verwiesen. Fig. 2 zeigt eine Skizze eines Strahlungsquellen/Detektor-Systems mit einer Strahlungsquelle 50 und einem Detektor 52, wobei zwischen dem Detektor 52 und der Strahlungsquelle 50 ein Objekt 54 angeordnet ist. Es sei darauf hingewiesen, daß bei der dreidimensionalen Computertomographie die Strahlungsquelle eine in einem Raumkegel abstrahlende Strahlungsquelle ist. Das Objekt 54 ist ein dreidimensionales Objekt, das bei der in Fig. 2 gezeigten schematischen Darstellung im Querschnitt dreieckig gezeichnet ist. Der Detektor 52 ist bei der dreidimensionalen Computertomographie ein Flächendetektor mit einem zweidimensionalen Array von Pixeln 53, die in Fig. 2 lediglich schematisch angedeutet sind.

Das in Fig. 2 gezeigte System arbeitet derart, daß zunächst das Objekt 54 in der in Fig. 2 gezeigten durch durchgezogene Linien angedeuteten Position zwischen Strahlungsquelle und Detektor gebracht wird, wobei am Detektor eine Projektion des Objekts 54 erzeugt wird. Verschiedene Strahlen der punktförmig gedachten Strahlungsquelle 50 haben verschieden Durchstrahlungslängen und werden daher unterschiedlich stark geschwächt. So haben die beiden Strahlen 56 und 58 lediglich eine sehr kleine Durchstrahlungslänge durch das Objekt, während ein mittlerer Strahl 60 eine wesentlich größere Durchstrahlungslänge durch das Objekt 54 aufweist. Die Projektion des Objekts 54 in seiner in durchgestrichenen Linien gezeigten Position wird zusammen mit einer Information, daß das Objekt bei dieser Projektion eine Drehung von z. B. 0° hatte, versehen. Hierauf wird das Objekt um einen bestimmten Drehwinkel gedreht, so daß sich zwischen der Strahlungsquelle und dem Detektor ein gedrehtes Objekt 54' befindet. Dann wird wieder eine Projektion des nunmehr gedrehten Objekts aufgezeichnet und mit einer Lageinformation versehen, die den Drehwinkel des Objekts 54' gegenüber seiner ursprünglichen Position (Objekt 54 in durchgezogenen Linien in Fig. 2) anzeigt. Bei der dreidimensionalen Computertomographie genügt es, mehrere Projektionen des von Projektion zu Projektion gedrehten Objekts aufzuzeichnen, bis das Objekt um 360° gedreht ist. Je nach erwünschter Meßgenauigkeit kann das Objekt von Projektion zu Projektion z. B. um 1° gedreht werden. Drehwinkel kleiner als 1° bzw. größer als 1° sind jedoch ebenfalls je nach gewünschter Anforderung im Einsatz.

Die Projektionen mit zugeordneten Lageinformationen bilden zusammen die Projektionsdaten eines Objekts, die beispielsweise in einem geeigneten für die Weiterverarbeitung günstigen Format abgespeichert werden können. Es sei darauf hingewiesen, daß jede Projektion bei der dreidimensionalen Computertomographie ein zweidimensionales Array von Pixeln umfaßt. Die Projektionsdaten, die durch das in Fig. 2 gezeigte System erzeugt werden, werden auch als Rohdaten bezeichnet.

Im nachfolgenden wird wieder auf Fig. 1 Bezug genommen, um die erfindungsgemäße Ermittlung der Korrekturkennlinie ohne Referenzobjekt oder zusätzliche Informationen darzustellen.

Die Projektionsdaten werden zunächst als Rohdaten in eine Einrichtung 12 zum Berechnen einer Darstellung des Objekts eingespeist, um Volumendaten für das Objekt zu erhalten. Es wird bevorzugt, die Volumendaten in Form von Voxeln, d. h. Volumenelementen, bereitzustellen. Die Einrichtung 12 kann nach irgendeinem bekannten Verfahren zum Rekonstruieren eines Objekts aus Computertomographie-Projektionen arbeiten.

Aus den Volumendaten des Objekts, die selbstverständlich noch artefaktbehaftet sind, da noch keine Artefaktkorrektur durchgeführt worden ist, wird nunmehr mittels einer Einrichtung 14a zum Ermitteln einer Durchstrahlungslänge und unter Verwendung einer Einrichtung 14b zum Ermitteln des einer ermittelten Durchstrahlungslänge zugeordneten Durchstrahlungswerts ein Satz von mehreren Wertepaaren erzeugt, wobei jedes Wertepaar sowohl einen Durchstrahlungswert, d. h. einen Intensitätswert, als auch eine Durchstrahlungslänge umfaßt.

Die Einrichtung 14a zum Ermitteln einer Durchstrahlungslänge ermittelt den Abstand zwischen einem Eintrittspunkt eines Strahls in die Volumendaten und einem Austrittspunkt des Strahls aus den Volumendaten, wobei dieser Abstand beispielsweise durch Abzählen der zwischen den beiden Punkten vorhandenen Voxeln abgeschätzt werden kann. Diese Abschätzung ist jedoch nur dann exakt, wenn der Strahl diagonal durch jedes Voxel durchtritt. Dies ist jedoch nur für bestimmte Strahlen der Fall. So sind jedoch genauere Verfahren zum Berechnen des kürzesten Abstands zwischen zwei Voxeln, d. h. einem Eintritts-Voxel und einem Austritts-Voxel in der Technik bekannt.

Es sei darauf hingewiesen, dass die obigen Betrachtungen für den Fall exakt zutreffen, bei dem ein homogener ausgefüllter Körper vorliegt, bei dem für einen Strahl ein einziger Eintrittspunkt und ein einziger Austrittspunkt vorliegt. Wird dagegen beispielsweise ein hohler Zylinder betrachtet, so hat ein Strahl einen Eintrittspunkt, einen Austrittspunkt, einen erneuten Eintrittspunkt und wieder einen Austrittspunkt. Die Durchstrahlungslänge ist dann lediglich der Abstand vom ersten Eintrittspunkt bis zum ersten Austrittspunkt und der Abstand vom zweiten Eintrittspunkt zum zweiten Austrittspunkt. Die Einrichtung 14a ist somit derart ausgebildet, dass die von einem Strahl getroffenen Voxel gehen mit unterschiedlicher Gewichtung in ein Maß für die Durchstrahlungslänge eingehen. Ein Beispiel für die Gewichtung wäre, dass die Pixel zwischen dem ersten Eintrittspunkt und dem ersten Austrittspunkt mit dem Faktor "1" gewichtet werden, während die Pixel zwischen dem ersten Austrittpunkt und dem zweiten Eintrittspunkt mit dem Faktor "0" gewichtet werden. Weitere Gewichtungen sind möglich.

Die Einrichtung 14b ist ausgebildet, um den Strahl, dessen Durchstrahlungslänge durch das Volumen durch die Einrichtung 14a bestimmt worden ist, - anschaulich gesprochen - zum Detektor hin fortzusetzen, um ein bestimmtes Detektorpixel zu ermitteln, dessen Intensitätswert der durch die Einrichtung 14a bestimmten Durchstrahlungslänge zugeordnet werden soll. Nachdem das ermittelte Pixel jedoch für jede Projektion des Objekts einen eigenen Intensitätswert hat, wird nunmehr durch die Einrichtung 14b noch ermittelt, für welche Projektion aus den Projektionsdaten der betrachtete Strahl die berechnete Durchstrahlungslänge aufweist. Dies geschieht anhand von Lageinformationen, die den einzelnen Projektionen zugeordnet sind, so daß die Einrichtung 14b über einen Zweig 15 Lageinformationen aus den Projektionsdaten erhält, damit einer bestimmten Durchstrahlungslänge, die ein Strahl durch das Objekt hatte, auch der korrekte Durchstrahlungswert zugeordnet wird, der vom Detektor beim Erzeugen der Projektionsdaten, wie es in Fig. 2 ausgeführt worden ist, angezeigt worden ist.

Je nach erwünschter Genauigkeit für die Korrekturkennlinie sind die Einrichtungen 14a und 14b ausgebildet, um mehrere Wertepaare (Durchstrahlungswert; Durchstrahlungslänge) zu erzeugen. Diese mehreren Wertepaare werden nunmehr in eine Einrichtung 16 zum Erzeugen der Korrekturkennlinie eingespeist. Die Einrichtung 16 zum Erzeugen der Korrekturkennlinie kann auf verschiedene Arten und Weisen ausgebildet sein. Sie könnte beispielsweise, wenn genug Wertepaare vorliegen, eine Interpolation zwischen den Wertepaaren durchführen und die Wertepaare an sich sowie die durch Interpolation berechneten Wertepaare in einer vorgebbaren Auflösung tabellarisch abspeichern. Alternativ kann die Einrichtung 16 zum Erzeugen der Korrekturkennlinie ausgebildet sein, um eine analytische Funktion an die Wertepaare anzupassen, beispielsweise unter Verwendung eines in der Technik bekannten Fitting-Algorithmus.

Am Ausgang der Einrichtung 16 liegt somit eine Korrekturkennlinie entweder in Form einer Tabelle oder in Form einer analytischen Funktion vor, die je nach Artefakt-Stärke und Beschaffenheit des Strahlungsquellen/Detektor-Systems bereits als Eichkurve für einen nachfolgenden Meßlauf verwendet werden kann. Obgleich das erfindungsgemäße Konzept eine schnelle Konvergenz zeigt, derart, daß bereits die erste ermittelte Korrekturkennlinie eine oftmals brauchbare Annäherung an die benötigte Korrekturkennlinie ist, wird es bevorzugt, die Korrekturkennlinie iterativ zu bestimmen.

Hierfür ist, wie es in Fig. 1 gezeigt ist, eine Iterationseinrichtung 18 vorgesehen, die unter Verwendung der von der Einrichtung 16 ausgegebenen Korrekturkennlinie eine Vorkorrektur der Projektionsdaten mittels einer Einrichtung 20 für eine Vorkorrektur durchführt, um vorkorrigierte Durchstrahlungswerte zu erzeugen, die dann in die Einrichtung 12 statt der ursprünglichen Projektionsdaten eingespeist werden. Die Einrichtung 12 sowie die Einrichtungen 14a, 14b und 16 führen dann in dem nun folgenden Iterationslauf dieselben Berechnungen wie im ersten Durchgang durch, jedoch nunmehr nicht unter Verwendung der ursprünglichen Projektionsdaten, die durch die Einrichtung bereitgestellt werden, sondern unter Verwendung der vorkorrigierten Projektionsdaten bzw. vorkorrigierten Durchstrahlungswerte, die von der Einrichtung 20 bereitgestellt werden.

Nach einem ersten Iterationslauf ergibt sich am Ausgang der Einrichtung 16 nunmehr eine korrigierte Korrekturkennlinie, die, wenn es erwünscht ist, mittels einer weiteren Iteration oder mehrerer weiterer Iterationen, die durch die Iterationseinrichtung 18 gesteuert werden, weiter verbessert werden kann, oder bereits als Eich-Systemkennlinie eingesetzt werden kann.

Das Iterationsverfahren wird bei einem bevorzugten Ausführungsbeispiel der vorliegenden Erfindung so lange wiederholt, bis ein Abbruchkriterium für die Iteration erfüllt ist. Das Abbruchkriterium kann beispielsweise die Änderung der korrigierten Korrekturkennlinie im Vergleich zur Korrekturkennlinie aus dem vorherigen Iterationslauf sein. Ein weiteres Abbruchkriterium kann unter Verwendung der Volumendaten, die durch die Einrichtung 12 erzeugt werden, generiert werden.

So wird es für dieses Abbruchkriterium bevorzugt, die Volumendaten eines ersten Durchgangs mit den Volumendaten eines zweiten Durchgangs zu vergleichen und festzustellen, wie viel Voxel, d. h. Volumenelemente, sich von dem einen Durchgang zum nächsten Durchgang verändert hatten. Liegt diese Anzahl der veränderten Voxel unter einer vorgegebenen Schwelle, so wird das Abbruchkriterium als erfüllt angesehen. Liegt die Zahl dagegen über einer vorbestimmten Schwelle, so wird ein weiterer Iterationsdurchgang ausgeführt.

In Fig. 3 ist entlang der Ordinate die logarithmische Schwächung der Intensität I bezogen auf eine Referenzintensität 10 aufgetragen, die im idealen Fall gleich dem Produkt aus Durchstrahlungslänge d und Absorptionskoeffizient µ ist. Es sei jedoch darauf hingewiesen, daß genauso die Intensität über der Durchstrahlungslänge aufgetragen werden kann. Im Sinne der vorliegenden Erfindung umfaßt der Ausdruck "Durchstrahlungswert" somit z. B. die Intensität direkt (die Kennlinie wäre dann fallend) oder die Schwächung, die von der Intensität abgeleitet ist oder irgend eine andere Größe, die von der Intensität ableitbar ist.

Eine ideale lineare Systemkennlinie ist einer realen Systemkennlinie (Korrekturkennlinie) gegenübergestellt. Die ideale Kennlinie hat einen linearen monoton steigenden Verlauf, wobei einer kurzen Durchstrahlungslänge ein niedriger Dämpfungswert P (entspricht einer hohen Intensität am Detektor) zugeordnet ist, und wobei einer hohen Durchstrahlungslänge ein hoher Dämpfungswert zugeordnet ist.

Eine reale Korrekturkennlinie hat einen aufgrund der physikalischen Effekte bei der Aufnahme der Projektionsdaten anders gearteten Verlauf, wobei die Abweichung zwischen der Korrekturkennlinie und der idealen Kennlinie dazu verwendet wird, um in der Einrichtung 20 eine Vorkorrektur (Fig. 1) der Projektionsdaten durchzuführen, wie es in der Technik bekannt ist.

Wenn die Korrekturkennlinie, die in Fig. 3 gezeigt ist, beispielsweise die Korrekturkennlinie ist, die von der Einrichtung 16 von Fig. 1 nach einem ersten Durchgang ausgegeben wird, so hat die Einrichtung 12 zum Berechnen einer Darstellung des Objekts mit Volumendaten ebenfalls im ersten Durchgang die ideale Kennlinie von Fig. 3 zugrunde gelegt, d. h. keine Korrektur ausgewählt.

Um die Konvergenz des erfindungsgemäßen Verfahrens, d. h. die Qualität der Korrekturkennlinie nach einem ersten Durchgang durch die Blöcke 12, 14a, 14b und 16 zu verbessern, kann bereits vor der erstmaligen Berechnung einer Darstellung des Objekts mit Volumendaten eine vorgegebene Korrekturkennlinie eingesetzt werden, die beispielsweise aufgrund von Erfahrungswerten mit einem Strahlungsquellen/Detektor-System ermittelt worden ist. Diese Vorgabe kann jedoch die Flexibilität des Systems einschränken und ist nur dann sinnvoll, wenn Erfahrungen über ein System bestehen, das unter annähernd gleichen Bedingungen, beispielsweise zur Prüfung ähnlicher Gußteile, verwendet wird. Für die Funktionalität des Verfahrens an sich ist jedoch keine vorgegebene Korrekturkennlinie erforderlich, sondern die Projektionsdaten können direkt, also ohne Vorkorrektur, im ersten Durchgang der Einrichtung 12 zugeführt werden, um mehr oder weniger stark artefaktbehaftete Volumendaten des Objekts zu erzeugen.

Die Einrichtung 12 zum Berechnen einer Darstellung des Objekts liefert, wenn sie gemäß einem bekannten Rekonstruktionsalgorithmus arbeitet, nicht nur die Volumendaten des Objekts sondern auch Daten über den Hintergrund des Objekts. Um die Funktionalität der Einrichtung 14a zu vereinfachen, wird es bevorzugt, aus den Tomogrammen das gesuchte Objekt zu segmentieren, wobei zur Konturfindung ein 3D-Kantenfindungs-Operator angewendet wird.

Ein Linienverfolgungs-Algorithmus zeichnet nunmehr die gefundenen Kanten nach, um das Objekt vom Hintergrund zu trennen.

Anschließend wird eine Segmentierung, wie z. B. eine Binarisierung, der Volumendaten des Objekts, das aus einem einzigen Material besteht, durchgeführt. Eine Binarisierung der Volumendaten kommt dann in Betracht, wenn im Volumen nur zwei Zustände sind, d. h. "Material" oder "kein Material".

Bisher hatte jedes Volumenelement einen zugeordneten Wert, der auf die Absorptionsdichte hinweist. Da die Dichteinformation jedoch von der Einrichtung 14a nicht benötigt wird, sondern lediglich die Information, ob ein Voxel innerhalb des Objekts oder außerhalb des Objekts ist, wird nunmehr eine Binarisierung der Volumendaten durchgeführt. Die Dichteinformation aller Voxeldaten, die sich innerhalb der Objektgrenzen befinden, werden beispielsweise zu einer logischen "1" gesetzt, während die Dichteinformationen aller Voxeldaten, die sich außerhalb der Umrandung des Objekts befinden, beispielsweise auf "0" gesetzt werden. Die Einrichtung 14a erzeugt somit zunächst, bevor sie die Durchstrahlungslänge berechnet, eine binarisierte Volumendarstellung des Objekts, in der der Hintergrund beispielsweise weiß ist, während das Objekt selber schwarz ist. Für den allgemeinen Fall der Segmentierung werden die Dichteinformationen auf jeweils einen von mehr als zwei Zuständen gesetzt.

Die Einrichtung 14a umfaßt bevorzugterweise einen voxelbasierten Raytracer (Strahlverfolgungsalgorithmus), der für einen Strahl von der punktförmig gedachten Röntgenquelle zu einem Detektorpixel den Weg durch das Objekt ermittelt und beispielsweise die Pixel auf dem Weg des Strahls durch das Objekt zählt, die auf "1", d. h. "Material vorhanden", gesetzt sind. Die Einrichtung 14b ermittelt dann das diesem Strahl zugehörige Detektorpixel, auf das der verfolgte Strahl auftrifft und den Intensitätswert aus der durch die Lageinformationen ermittelten, diesem Strahl zugehörigen Projektion. Somit entsteht am Ausgang der Einrichtungen 14a und 14b ein Satz von mehreren Wertepaaren, wobei jedes Wertepaar einen Durchstrahlungswert und eine Durchstrahlungslänge umfaßt.

Vorzugsweise arbeitet die Einrichtung 16 zum Erzeugen der Korrekturkennlinie derart, daß sie einen optimierten Fit-Algorithmus auf die Wertepaare ansetzt, bei dem eine physikalisch plausible Funktion durch die ermittelten Wertepaare gefittet wird.

Zur Kantenextraktion wird ein 3D-Canny-Operator bevorzugt. Zum Funktionenfitting in der Einrichtung 16 wird eine sogenannten Levenberg-Marquardt-Routine bevorzugt. Selbstverständlich können auch andere Kanten-Operatoren oder Fitting-Algorithmen eingesetzt werden.

Wie es bereits ausgeführt worden ist, kann durch die Iterationseinrichtung 18 eine oder mehrere weitere Iterationen angeordnet werden, wobei vor jedem Iterationsdurchgang nunmehr mittels der Einrichtung 20 eine Vorkorrektur der Projektionsdaten unter Verwendung der von der Einrichtung 16 ermittelten Korrekturkennlinie durchgeführt wird, derart, daß die Volumendaten am Ausgang der Einrichtung 12 von Iteration zu Iteration idealerweise immer weniger artefaktbehaftet sind.

Sowohl vor der ersten Rekonstruktion durch die Einrichtung 12 zum Berechnen als auch in weiteren Rekonstruktionen, d. h. Iterationen, werden die in den Projektionsdaten enthaltenen Schwächungswerte gemäß dem anhand von Fig. 3 beschriebenen Prozedere in Durchstrahlungslängen umgesetzt. In der allerersten Iteration wird jedoch eine beliebige Kennlinie, wie z. B. die in Fig. 3 dargestellte ideale lineare Kennlinie zur Umsetzung von Schwächungswerten in Durchstrahlungslängen verwendet, aus denen dann die Darstellungsdaten mit einem üblichen Tomographie-Rekonstruktionsalgorithmus ermittelt werden. Aus diesen Darstellungsdaten wird dann die reale Korrekturkennlinie ermittelt, wobei lediglich darauf geachtet werden muß, daß nicht nur ein Wertepaar sondern mehrere über den vermuteten Bereich von Durchstrahlungslängen sinnvoll verteilte Wertepaare ermittelt werden. In der zweiten Iteration, sofern diese überhaupt durchgeführt wird, werden dieselben Projektionsdaten verwendet, die in der Einrichtung 10 erhalten wurden. Die Schwächungswerte dieser Projektionsdaten werden nun jedoch unter Verwendung der ermittelten realen Korrekturkennlinie in Durchstrahlungslängen umgesetzt, die nunmehr zu stark artefaktreduzierten zwei- oder vorzugsweise dreidimensionalen Darstellungsdaten führen.

Anstatt der in Fig. 3 dargestellten idealen linearen Kennlinie kann auch irgend eine andere nicht unbedingt lineare Kennlinie verwendet werden, sofern sie so gewählt ist, daß numerische Grenzen eines verwendeten Rechners nicht verletzt werden. Insofern scheidet eine senkrechte oder eine waagrechte Kennlinie aus. Bevorzugt wird daher eine Kennlinie, die sich in vernünftigem Rahmen durch das in Fig. 3 gezeigte Koordinatensystem erstreckt.

Obgleich im vorstehenden auf eine dreidimensionale Ausführung des Konzepts zum Erstellen einer Korrekturkennlinie eingegangen worden ist, sei darauf hingewiesen, dass das Konzept auch auf zweidimensionale Daten, also auf Flächendaten anstatt von Volumendaten als eine Form von Darstellungsdaten für das Objekt, anwendbar ist.

Zusammenfassend basiert die beschriebene Erfindung auf einer vorzugsweise iterativen Verbesserung der Rekonstruktionen ohne Zuhilfenahme eines Referenzobjekts, wobei ferner auch keine anderen a-priori-Informationen über die Geometrie oder die Materialzusammensetzung des Prüflings oder Informationen über das Energiespektrum der verwendeten Röntgenquelle benötigt werden.

## Patentansprüche

1. Vorrichtung zum Erstellen einer Korrekturkennlinie für eine Reduktion von Artefakten bei einer Tomographie, mit folgenden Merkmalen:
einer Einrichtung (10) zum Bereitstellen von Projektionsdaten eines aus einem einzigen Material bestehenden Objekts, wobei die Projektionsdaten Durchstrahlungswerte für das Objekt umfassen, die Schwächungswerte oder Intensitätswerte umfassen;
einer Einrichtung (12) zum Berechnen einer Darstellung des Objekts aus den Projektionsdaten, um Darstellungsdaten für das Objekt zu erhalten, wobei die Darstellungsdaten zweidimensionale oder dreidimensionale Daten sind, wobei die Einrichtung (12) zum Berechnen ausgebildet ist, um zunächst unter Verwendung einer vorgegebenen zu korrigierenden Vorgabe-Kennlinie die Schwächungswerte oder Intensitätswerte in Durchstrahlungslängen umzusetzen, um umgesetzte Durchstrahlungslängen zu erhalten, und um dann aus den umgesetzten Durchstrahlungslängen die Darstellungsdaten zu berechnen;
einer Einrichtung (14a) zum Ermitteln eines Maßes für eine Durchstrahlungslänge des Objekts unter Verwendung der Darstellungsdaten;
einer Einrichtung (14b) zum Ermitteln eines Durchstrahlungswerts, der dem ermittelten Maß für die Durchstrahlungslänge zugeordnet ist; und
einer Einrichtung (16) zum Erzeugen der Korrekturkennlinie aus mehreren ermittelten Maßen für Durchstrahlungslängen und zugeordneten Durchstrahlungswerten, wobei die Korrekturkennlinie eine Zuordnung von Schwächungs- oder Intensitätswerten zu Durchstrahlungslängen umfasst und somit eine korrigierte Version der Vorgabe-Kennlinie darstellt.

2. Vorrichtung nach Anspruch 1, die ferner folgendes Merkmal aufweist:
eine Iterationseinrichtung (18), die ausgebildet ist, um
unter Verwendung der Korrekturkennlinie eine erneute Darstellung des Objekts zu erzeugen, um korrigierte Darstellungsdaten für das Objekt zu erhalten;
unter Verwendung der korrigierten Darstellungsdaten mehrere korrigierte Maße für Durchstrahlungslängen für das Objekt und zugeordnete korrigierte Durchstrahlungswerte zu ermitteln; und
eine korrigierte Korrekturkennlinie aus mehreren ermittelten korrigierten Maße für Durchstrahlungslängen und zugeordneten korrigierten Durchstrahlungswerten zu erzeugen;
wobei die Iterationseinrichtung (18) ferner angeordnet ist, um eine Iteration abzubrechen, wenn ein vorbestimmtes Abbruchkriterium erfüllt ist.

3. Vorrichtung nach Anspruch 2, bei der die Iterationseinrichtung (18) ausgebildet ist, um als Abbruchkriterium eine Änderung unter einer vorbestimmten Änderungsschwelle der korrigierten Darstellungsdaten von einem Iterationsschritt zu einem weiteren Iterationsschritt zu verwenden.

4. Vorrichtung nach Anspruch 3, bei der die Darstellungsdaten Voxel umfassen, und bei der die vorbestimmte Schwelle auf der Basis einer Änderung der Gesamtanzahl von Voxeln in einem Iterationsschritt zu einem weiteren Iterationsschritt bestimmbar ist.

5. Vorrichtung nach einem der vorhergehenden Ansprüche,
bei der die Einrichtung (12) zum Berechnen einer Darstellung des Objekts ausgebildet ist, um bei einer erstmaligen Berechnung einer Darstellung eine lineare Systemkennlinie zu verwenden.

6. Vorrichtung nach einem der vorhergehenden Ansprüche,
bei der die Einrichtung (12) zum Berechnen angeordnet ist, um eine Volumendarstellung des Objekts samt seinem Hintergrund zu berechnen, und um dann Kanten des Objekts zu detektieren, auf deren Basis in der Darstellung zwischen dem Objekt und seinem Hintergrund eindeutig unterschieden werden kann.

7. Vorrichtung nach einem der vorhergehenden Ansprüche,
bei der die Einrichtung (14a) zum Ermitteln eines Maßes für eine Durchstrahlungslänge ausgebildet ist, um Darstellungsdaten, die zu dem Objekt gehören, in zumindest einen ersten Zustand zu setzen, und um Darstellungsdaten der Darstellung des Objekts, die nicht zu dem Objekt, sondern zu einem Hintergrund, gehören, in einen zweiten Zustand zu setzen, der sich von dem ersten Zustand unterscheidet, um segmentierte Darstellungsdaten der Rekonstruktion zu erhalten.

8. Vorrichtung nach Anspruch 7, bei der die Einrichtung (14a) zum Ermitteln ausgebildet ist, um die Darstellungsdaten, die zu dem Objekt gehören in eine Mehrzahl von Zuständen zu setzen, um eine Segmentierung der Darstellungsdaten des Objekts gemäß einer Abschwächungseigenschaft von Segmenten des Objekts zu erhalten.

9. Vorrichtung nach einem der vorhergehenden Ansprüche,
bei der die Darstellungsdaten Volumenelemente aufweisen, und
bei der die Einrichtung (14a) zum Ermitteln eines Maßes für eine Durchstrahlungslänge ausgebildet ist, um auf der Basis einer Gewichtung von von einem Strahl getroffenen Datenelementen zwischen einem Eintrittspunkt des Strahls von einer Strahlungsquelle (50) in die Darstellung des Objekts zu einem Austrittspunkt des Strahls aus der Darstellung des Objekts das Maß für die Durchstrahlungslänge zu ermitteln, wobei die Gewichtung auf der Basis einer Segmentierung der Darstellungsdaten für das Objekt durchführbar ist.

10. Vorrichtung nach Anspruch 9,
bei der die Einrichtung (14a) angeordnet ist, um einen Strahlverfolgungsalgorithmus zu verwenden, der auf der Basis eines von einer punktförmigen Strahlungsquelle (50) emittierten Strahls, der sich von der Strahlungsquelle durch das Objekt (54) hindurch zu einem Pixel (53) eines Detektors (52) erstreckt, arbeitet.

11. Vorrichtung nach einem der vorhergehenden Ansprüche,
bei der die Einrichtung (16) zum Erzeugen der Korrekturkennlinie angeordnet ist, um eine Funktion an die mehreren ermittelten Maße für Durchstrahlungslängen und zugeordneten Durchstrahlungswerte anzupassen.

12. Vorrichtung nach einem der vorhergehenden Ansprüche, bei der die Darstellungsdaten dreidimensionale Daten sind und Voxelelemente umfassen.

13. Vorrichtung nach einem der vorhergehenden Ansprüche, bei der die Vorgabe-Kennlinie eine lineare Kennlinie mit einer vorbestimmten Steigung ist.

14. Vorrichtung nach einem der vorhergehenden Ansprüche, bei der die Vorgabe-Kennlinie unabhängig von einer Materialzusammensetzung des Objekts und/oder unabhängig von einem Energiespektrum einer verwendeten Röntgenquelle gewählt ist.

15. Verfahren zum Erstellen einer Korrekturkennlinie für eine Reduktion von Artefakten bei einer Tomographie, mit folgenden Schritten:
Bereitstellen (10) von Projektionsdaten eines aus einem einzigen Material bestehenden Objekts, wobei die Projektionsdaten Durchstrahlungswerte für das Objekt umfassen, die Schwächungswerte oder Intensitätswerte umfassen;
Berechnen (12) einer Darstellung des Objekts aus den Projektionsdaten, um Darstellungsdaten für das Objekt zu erhalten, wobei die Darstellungsdaten zweidimensionale oder dreidimensionale Daten sind, wobei im Schritt des Berechnens zunächst unter Verwendung einer vorgegebenen zu korrigierenden Vorgabe-Kennlinie die Schwächungswerte oder Intensitätswerte in Durchstrahlungslängen umgesetzt werden, um umgesetzte Durchstrahlungslängen zu erhalten, und wobei dann aus den umgesetzten Durchstrahlungslängen die Darstellungsdaten berechnet werden;
Ermitteln (14a) eines Maßes für eine Durchstrahlungslänge des Objekts unter Verwendung der Darstellungsdaten;
Ermitteln (14b) eines Durchstrahlungswerts, der dem ermittelten Maß für die Durchstrahlungslänge zugeordnet ist; und
Erzeugen (16) der Korrekturkennlinie aus mehreren ermittelten Maßen für Durchstrahlungslängen und zugeordneten Durchstrahlungswerten, wobei die Korrekturkennlinie eine Zuordnung von Schwächungs- oder Intensitätswerten zu Durchstrahlungslängen umfasst und somit eine korrigierte Version der Vorgabe-Kennlinie darstellt.

16. Verfahren nach Anspruch 15, das ferner folgende Schritte aufweist:
Vorkorrigieren (20) der Projektionsdaten unter Verwendung der Korrekturkennlinie; und
iteratives Wiederholen (18) der Schritte des Berechnens, des Ermittelns eines Maßes für die Durchstrahlungslänge, des Ermittelns des zugeordneten Durchstrahlungswerts und des Erzeugens der Korrekturkennlinie unter Verwendung der vorkorrigierten Projektionsdaten, bis ein Abbruchkriterium für die Iteration erfüllt ist.

## Claims

1. Apparatus for establishing a correction characteristic curve for a reduction of artefacts in a tomography, comprising:
means (10) for providing projection data of an object consisting of a single material, wherein the projection data comprise transmission values for the object which comprise weakening values or intensity values;
means (12) for calculating a representation of the object from the projection data to obtain representation data for the object, wherein the representation data are two-dimensional or three-dimensional data, wherein means (12) for calculating is formed to first convert the weakening values or intensity values to transmission lengths, by using a predetermined default characteristic curve to be corrected, to obtain converted transmission lengths, and to calculate the representation data from the converted transmission lengths;
means (14a) for determining a measure for a transmission length of the object by using the representation data;
means (14b) for determining a transmission value, which is associated to the determined measure for the transmission length; and
means (16) for generating the correction characteristic curve of several determined measures for transmission lengths and associated transmission values, wherein the correction characteristic curve comprises an association of weakening or intensity values to transmission lengths and thus represents a corrected version of the default characteristic curve.

2. Apparatus according to claim 1, further comprising:
iteration means (18), which is formed to
generate a renewed representation of the object by using the correction characteristic curve to obtain corrected representation data for the object;
determine several corrected measures for transmission lengths for the object and associated corrected transmission values by using the corrected representation data; and
generate a corrected correction characteristic curve of several determined corrected measures for transmission lengths and associated corrected transmission values;
wherein the iteration means (18) is further disposed to terminate iteration if a predetermined termination criterion is fulfilled.

3. Apparatus according to claim 2, wherein the iteration means (18) is formed to use a change under a predetermined changing threshold of the corrected representation data from one iteration step to a further iteration step as termination criterion.

4. Apparatus according to claim 3, wherein the representation data comprise voxel, and wherein the predetermined threshold can be determined based on the change of the total number of voxels in one iteration step to a further iteration step.

5. Apparatus according to one of the previous claims,
wherein the means (12) for calculating the representation of an object is formed to use a linear system characteristic curve in a first calculation of a representation.

6. Apparatus according to one of the previous claims,
wherein the means (12) for calculating is disposed to calculate a volume representation of the object with its background, and to detect edges of the object, based on which it can be clearly distinguished between the object and its background in the representation.

7. Apparatus according to one of the previous claims,
wherein the means (14a) for determining a measure for a transmission length is formed to set representation data belonging to the object into at least a first state, and to set representation data of the representation of the object, which do not belong to the object but to the background, into a second state, which differs from the first state, to obtain a segmented representation data of the reconstruction.

8. Apparatus according to claim 7, wherein the means (14a) for determining is formed to set representation data, which belong to the object, into a plurality of states, to obtain a segmentation of the representation data of the object according to a weakening property of segments of the object.

9. Apparatus according to one of the previous claims,
wherein the representation data have volume elements, and
wherein the means (14a) for determining a measure for a transmission length is formed to determine the measure for the transmission length based on a weighting of data elements hit by a ray between an entry point of the ray from a radiation source (50) into the representation of the object to an exit point of the ray from the representation of the object, wherein the weighting can be performed based on a segmentation of the representation data for the object.

10. Apparatus according to claim 9,
wherein the means (14a) is disposed to use a ray tracing algorithm, which operates based on a ray emitted from a first point shaped radiation source (50), which extends from the radiation source to the object (54) to a pixel (53) of a detector (52).

11. Apparatus according to one of the previous claims,
wherein the means (16) for generating the correction characteristic curve is disposed to adapt a function to the several determined measures for transmission lengths and associated transmission values.

12. Apparatus according to one of the previous claims, wherein the representation data are three-dimensional data and comprise voxel elements.

13. Apparatus according to one of the previous claims, wherein the default characteristic curve is a linear characteristic curve with a predetermined slope.

14. Apparatus according to one of the previous claims, wherein the default characteristic curve is chosen independent from a material composition of the object and/or independent of an energy spectrum of a utilized X-ray source.

15. Method for establishing a correction characteristic curve for a reduction of artefacts in tomography, comprising:
providing (10) projection data of an object consisting of a single material, wherein the projection data comprise transmission values for the object, which comprise weakening values or intensity values;
calculating (12) a representation of an object from the projection data, to obtain representation data for the object, wherein the representation data are two-dimensional or three-dimensional data, wherein in the step of calculating, first, the weakening values or intensity values are converted to transmission lengths by using a predetermined default characteristic curve to be corrected, to obtain converted transmission lengths, and wherein then the representation data are calculated from the converted transmission lengths;
determining (14a) a measure for a transmission length of the object by using the representation data;
determining (14b) a transmission value, which is associated to the determined measure for the transmission length; and
generating (16) the correction characteristic curve of several determined measures for transmission lengths and associated transmission values, wherein the correction characteristic curve comprises an association of the weakening or intensity values to transmission lengths, and thus represents a corrected version of the default characteristic curve.

16. Method according to claim 15, further comprising:
precorrecting (20) the projection data by using the correction characteristic curve; and
iteratively repeating (18) steps of calculating, of determining a measure for the transmission length, of determining the associated transmission value and of generating the correction characteristic curve by using the precorrected projection data, until a termination criterion for the iteration is fulfilled.

## Revendications

1. Dispositif pour établir une courbe caractéristique de correction pour une réduction d'artifices en tomographie, aux caractéristiques suivantes :
un mécanisme (10) destiné à préparer des données de projection d'un objet réalisé d'un seul matériau, les données de projection comportant des valeurs de balayage de l'objet qui comportent des valeurs d'atténuation ou des valeurs d'intensité ;
un dispositif (12) destiné à calculer une représentation de l'objet à partir des données de projection, pour obtenir des données de représentation de l'objet, les données de représentation étant des données bidimensionnelles ou tridimensionnelles, le dispositif (12) destiné à calculer étant réalisé de manière à convertir tout d'abord, à l'aide une courbe caractéristique par défaut à corriger prédéterminée, les valeurs d'atténuation ou les valeurs d'intensité en longueurs de rayonnement traversant, pour obtenir des longueurs de rayonnement traversant converties et pour calculer alors à partir des longueurs de rayonnement traversant converties les données de représentation ;
un dispositif (14a) destiné à déterminer une mesure pour une longueur de rayonnement traversant de l'objet à l'aide des données de représentation ;
un dispositif (14b) destiné à déterminer une valeur de balayage qui est associée à la mesure déterminée pour la longueur de rayonnement traversant ; et
un dispositif (16) destiné à générer la courbe caractéristique de correction à partir de plusieurs mesures déterminées pour les longueurs de rayonnement traversant et des valeurs de balayage associées, la courbe caractéristique de correction comportant une association de valeurs d'atténuation ou d'intensité aux longueurs de rayonnement traversant et représentant donc une version corrigée de la courbe caractéristique par défaut.

2. Dispositif selon la revendication 1, présentant, par ailleurs, la caractéristique suivante :
un dispositif d'itération (18) qui est réalisé pour
générer, à l'aide la courbe caractéristique de correction, une nouvelle représentation de l'objet, pour obtenir des données de représentation corrigées de l'objet ;
déterminer, à l'aide des données de représentation corrigées, plusieurs mesures corrigées des longueurs de rayonnement traversant de l'objet et des valeurs de balayage corrigées ; et
déterminer une courbe caractéristique de correction corrigée à partir de plusieurs mesures corrigées de longueurs de rayonnement traversant et de valeurs de balayage corrigées associées ;
le dispositif d'itération (18) étant, par ailleurs, disposé de manière à interrompre une itération lorsqu'un critère d'arrêt prédéterminé est rempli.

3. Dispositif selon la revendication 2, dans lequel le dispositif d'itération (18) est réalisé de manière à utiliser, comme critère d'arrêt, une modification au-dessous d'un seuil de modification prédéterminé des données de représentation corrigées d'une étape d'itération à l'autre.

4. Dispositif selon la revendication 3, dans lequel les données de représentation comportent des voxels, et dans lequel le seuil prédéterminé peut être déterminé sur base d'une modification du nombre total de voxels d'une étape d'itération à l'autre.

5. Dispositif selon l'une des revendications précédentes, dans lequel le dispositif (12) destiné à calculer une représentation de l'objet est réalisé de manière à utiliser, lors d'un premier calcul d'une représentation, une courbe caractéristique de système linéaire.

6. Dispositif selon l'une des revendications précédentes, dans lequel le dispositif (12) destiné à calculer est disposé de manière à calculer une représentation de volume de l'objet, y compris son fond, et pour détecter alors les bords de l'objet sur base desquels peut être faite une distinction univoque, dans la représentation, entre l'objet et son fond.

7. Dispositif selon l'une des revendications précédentes, dans lequel le dispositif (14a) destiné à déterminer une mesure pour une longueur de rayonnement traversant est réalisé pour placer les données de représentation appartenant à l'objet dans au moins un premier état, et pour placer les données de représentation de la représentation de l'objet n'appartenant pas à l'objet, mais à un fond, dans un deuxième état qui diffère du premier état, pour obtenir des données de représentation segmentées de la reconstruction.

8. Dispositif selon la revendication 7, dans lequel le dispositif (14a) destiné à déterminer est réalisé de manière à placer les données de représentation appartenant à l'objet dans une majorité d'états, pour obtenir une segmentation des données de représentation de l'objet selon une propriété d'atténuation de segments de l'objet.

9. Dispositif selon l'une des revendications précédentes,
dans lequel les données de représentation de l'objet présentent des éléments de volume, et
dans lequel le dispositif (14a) destiné à déterminer une mesure d'une longueur de rayonnement traversant est réalisé de manière à déterminer, sur base d'une pondération d'éléments de données atteintes par un rayon entre un point d'entrée du rayon d'une source de rayonnement (50) dans la représentation de l'objet et un point de sortie du rayon de la représentation de l'objet, la mesure de la longueur de rayonnement traversant, la pondération pouvant être effectuée sur base d'une segmentation des données de représentation de l'objet.

10. Dispositif selon la revendication 9, dans lequel le dispositif (14a) est disposé de manière à utiliser un algorithme de détection de rayon qui fonctionne sur base d'un rayon émis par une source de rayonnement en forme de point (50) et qui s'étend de la source de rayonnement, à travers l'objet (54), vers un pixel (53) d'un détecteur (52).

11. Dispositif selon l'une des revendications précédentes, dans lequel le dispositif (16) destiné à générer la courbe caractéristique de correction est disposé de manière à adapter une fonction aux plusieurs mesures déterminées pour des longueurs de rayonnement traversant et aux valeurs de balayage associées.

12. Dispositif selon l'une des revendications précédentes, dans lequel les données de représentation sont de données tridimensionnelles et comportent des voxels.

13. Dispositif selon l'une des revendications précédentes, dans lequel la courbe caractéristique par défaut est une courbe caractéristique linéaire à gradient ascendant prédéterminé.

14. Dispositif selon l'une des revendications précédentes, dans lequel la courbe caractéristique par défaut est choisie indépendamment d'une composition de matériau de l'objet et/ou indépendamment d'un spectre d'énergie d'une source de rayonnement X utilisée.

15. Procédé pour établir une courbe caractéristique de correction pour une réduction d'artifices en tomographie, aux étapes suivantes consistant à :
préparer (10) des données de projection d'un objet réalisé d'un seul matériau, les données de projection comportant des valeurs de balayage de l'objet qui comportent des valeurs d'atténuation ou des valeurs d'intensité ;
calculer (12) une représentation de l'objet à partir des données de projection, pour obtenir des données de représentation de l'objet, les données de représentation étant des données bidimensionnelles ou tridimensionnelles, à l'étape de calcul étant tout d'abord converties, à l'aide une courbe caractéristique par défaut à corriger prédéterminée, les valeurs d'atténuation ou les valeurs d'intensité en longueurs de rayonnement traversant, pour obtenir des longueurs de rayonnement traversant converties et à partir des longueurs de rayonnement traversant converties étant alors calculées les données de représentation ;
déterminer (14a) une mesure pour une longueur de rayonnement traversant de l'objet à l'aide des données de représentation ;
déterminer (14b) une valeur de balayage qui est associée à la mesure déterminée pour la longueur de rayonnement traversant ; et
générer (16) la courbe caractéristique de correction à partir de plusieurs mesures déterminées pour les longueurs de rayonnement traversant et des valeurs de balayage associées, la courbe caractéristique de correction comportant une association de valeurs d'atténuation ou d'intensité aux longueurs de rayonnement traversant et représentant donc une version corrigée de la courbe caractéristique par défaut.

16. Procédé selon la revendication 15, présentant, par ailleurs, les étapes suivantes consistant à :
pré-corriger (20) les données de projection à l'aide de la courbe caractéristique de correction ; et
répéter de manière itérative (18) les étapes de calcul, de détermination d'une mesure pour la longueur de rayonnement traversant, de détermination de la valeur de balayage associée et de génération de la courbe caractéristique de correction à l'aide des données de projection pré-corrigées, jusqu'à ce que soit rempli un critère d'arrêt de l'itération.
